# EUROPEAN PATENT APPLICATION

(11) **EP 2 883 685 A1**
(43) Date of publication of application: **17.06.2015**
(21) Application number: 13380058.1
(22) Date of filing: 12.12.2013
(51) Int. Cl.: B29C 67/00, B29C 47/00, B29L 31/00

(54) **Machine for the manufacture of three-dimensional porous structures applicable to tissue regenerative medicine**

(71) Applicant: Ideko, S.Coop., 20870 Elgoibar Guipuzcoa (ES); Danobat, S. Coop., 20870 Elgoibar Guipuzcoa (ES); GOITI S. COOP., 20870 Elgoibar Guipuzcoa (ES)
(72) Inventor: Alberdi Lorenzo, Raul, 20870 Elgoibar (Guipuzcoa) (ES)
(74) Representative: Cabinet Plasseraud

(57) **Abstract**

Machine for the manufacture of three-dimensional porous structures applicable to tissue regenerative medicine comprising a plastic material extrusion head (1) including a plastic material loading hopper (3), plastic material heating means and plastic material conducting means for conducting the plastic material from the loading hopper (3) to a melted plastic material application nozzle which is arranged inside a heated chamber (2), the nozzle having a plurality of outlets for the simultaneous deposition of several strands of melted plastic material, a tray with an adhesive surface being arranged in the heated chamber (2), said tray having a horizontal translational movement, and on which the nozzle deposits the strands of melted plastic material to form the three-dimensional porous structures, the extrusion head (1) having a relative rotational movement with respect to the tray.

## Description

### Field of the Art

The present invention relates to the manufacture of three-dimensional porous structures (also known as scaffolds) for applications in tissue regenerative medicine, proposing a machine which allows optimizing the production cost and the manufacturing time of said three-dimensional porous structures.

### State of the Art

In the scope of regenerative medicine and tissue engineering, porous structures, also known as scaffolds, are widely used as a support for mesenchymal cells (in cartilage, bone, marrow, fat, etc.) extracted from a patient, where said cells reproduce on the scaffold creating a new organ. These porous structures can be synthetic (biopolymers, ceramics, bioglass, etc.) or natural (collagen, alginates, etc.). These three-dimensional porous structures opens up the possibility of producing new human tissues that are capable of replacing injured tissues, preventing the risk of rejection by the immune system.

The shape of the porous structure or scaffold directly affects its properties and manufacturing cost. The size of the pores is critical because if the size of the pore is too big, the cells do not grow on the porous structure, and if the size of the pore is too small, the cells have no room to grow.

Electrospinning systems are known for obtaining porous structures with a suitable pore size, wherein a melted polymeric mass in the form of a very fine fiber, of the order of micrometers or nanometers, is applied on a deposition surface until a porous structure is obtained. The fiber is supplied through a hypodermic needle which is connected to a high voltage direct current power supply, whereas the deposition surface is a collector connected to the earth or to the negative terminal of the power supply, such that the potential difference established between the needle and the collector causes the precipitation of the fiber.

Other methods for obtaining porous structures with a larger fiber size are gravity deposition systems. These systems are based on depositing a strand of melted plastic material on a horizontal surface. The strand of melted material is continuously deposited on said horizontal surface such that multiple individual intertwinings of the strand, defining the three-dimensional porous structure, are obtained by means of continuous back and forth changes in the deposition path. These systems have a low productivity because they use a single strand that must perform multiple intertwinings in order to obtain the three-dimensional porous structure.

A machine which allows the mass manufacture of several porous structures at the same time optimizing the production cost and the manufacturing time of said porous structures is therefore necessary.

### Object of the Invention

According to the present invention, a machine for the manufacture of porous structures is proposed, whereby a plurality of strands of plastic material is deposited on a horizontal surface through a nozzle with multiple outlets, such that multiple intertwinings are obtained by means of continuous back and forth changes in the strand deposition path, each of said intertwinings defining a three-dimensional porous structure, thus reducing the manufacturing time and cost of the porous structures.

The machine for the manufacture of three-dimensional porous structures applicable to tissue regenerative medicine comprises a plastic material extrusion head including a plastic material loading hopper, plastic material heating means and plastic material conducting means for conducting the plastic material from the loading hopper to a melted plastic material application nozzle which is arranged inside a heated chamber.

Inside the heated chamber there is arranged a tray with an adhesive surface having a horizontal translational movement, and on which the nozzle deposits the strands of melted plastic material to form the three-dimensional porous structures. The heated chamber internally incorporates a radiator close to the plastic material application area on the tray, whereby a suitable temperature for the deposition of the strands of plastic material is assured.

The melted plastic material application nozzle has a plurality of outlets for the simultaneous deposition of several strands of melted plastic material, and it is arranged at a distance of less than 100 millimeters with respect to the tray to assure that the strands of melted plastic material are deposited on the tray in an aligned and orderly manner. The possibility that the tray, or the extrusion head, has a vertical translational movement to enable changing the distance between the plastic material application nozzle and the tray has been envisaged.

The plastic material conducting means of the extrusion head comprise a horizontal worm screw connecting with a vertical worm screw, at the outlet of which there is arranged a pump driving the plastic material through a channel to the nozzle inside the heated chamber, and wherein the channel is surrounded by a heater to assure that the temperature of the melted material does not drop from the moment it leaves the pump until the moment it reaches the plastic material application nozzle.

The plastic material heating means comprise three heaters that are arranged consecutively surrounding the outside of the vertical worm screw, such that the plastic material gradually melts in a progressive manner as it is driven by the vertical worm screw towards the pump.

The tray is arranged on a first platform horizontally movable in a first transverse direction, said first platform in turn being arranged on a second platform horizontally movable in a second longitudinal direction. The first platform incorporates runners sliding over transverse guides arranged on the second platform, and the second platform incorporates other runners sliding over transverse guides arranged on the heated chamber, and wherein the first platform is coupled to a first spindle-nut mechanism rotated by a first motor, and the second platform is coupled to a second spindle-nut mechanism rotated by a second motor. The first and second motors are arranged outside the heated chamber, the heated chamber having an opening to allow the transverse movement of the first motor and of the first spindle-nut mechanism.

The extrusion head has a relative rotational movement with respect to the tray, the extrusion head being able to have rotational movement, or the extrusion head being able to be fixed and the tray being able to have rotational movement in addition to the horizontal translational movement. To provide the extrusion head with a rotational movement, the extrusion head incorporates a sprocket wheel which is rotated by means of a pinion.

The extrusion head has a hinged area at the height of the connection between the pump and the channel which allows collapsing the extrusion head horizontally to facilitate the removal of the vertical worm screw, the extrusion head incorporating a support stand which allows supporting the extrusion head in its collapsed position.

### Description of the Drawings

Figure 1 shows a perspective view of the inside of the machine for the manufacture of porous structures of the invention.
Figure 2 shows a longitudinal section view of the machine for the manufacture of porous structures, wherein the plastic material extrusion head and the heated chamber where deposition occurs are seen.
Figure 3 shows an enlarged view of the extrusion head of Figure 2.

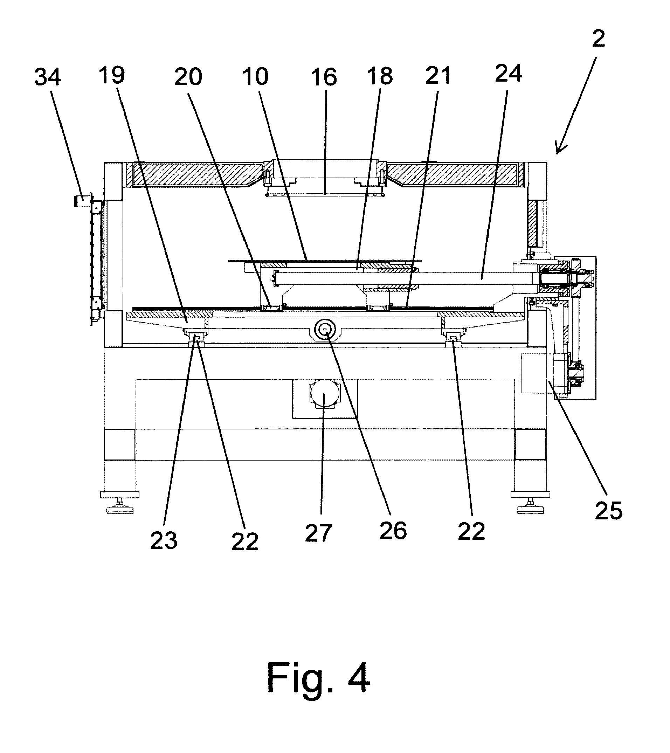

Figure 4 shows an enlarged view of the heated chamber of Figure 2.
Figure 5 shows a profile view of the extrusion head in a collapsed position to facilitate the removal of the vertical worm screw.
Figure 6 shows a perspective view of the moveable tray which is arranged inside the heated chamber.
Figure 7 shows a perspective view of the machine with a protective outer casing.
Figure 8 shows a schematic view of a set of strands of plastic materials deposited on the tray inside the heated chamber.
Figure 9 shows a perspective view of a three-dimensional porous structure made with the machine of the invention.

### Detailed Description of the Invention

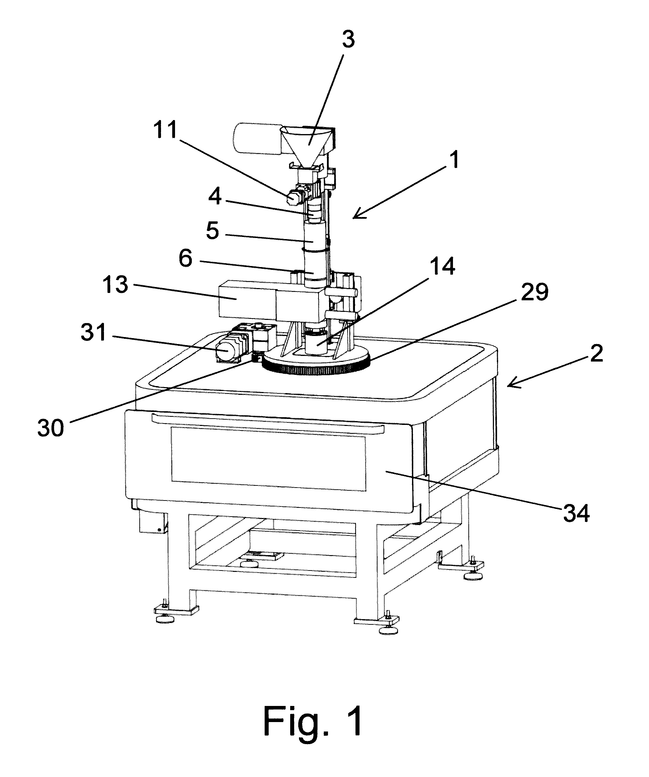

Figure 1 shows a perspective view of the machine for the manufacture of three-dimensional porous structures of the invention, comprising a plastic material extrusion head (1) which is arranged immediately above a heated chamber (2) having temperature conditions suitable for plastic material deposition and for obtaining the porous structures.

The plastic material extrusion head (1) includes a loading hopper (3) where the plastic material for forming the porous structures is introduced, generally in pellet form, heating means for melting the plastic material, and conducting means for conducting the plastic material from a loading hopper (3) to an application nozzle (9) for applying said already melted plastic material, which nozzle is arranged inside the heated chamber (2) where the porous structures are manufactured. The melted plastic material application nozzle (9) has a plurality of outlets for the simultaneous deposition of several strands of plastic material.

Inside the heated chamber (2), immediately in a lower position with respect to the melted plastic material application nozzle (9), there is arranged a tray (10) on which the melted plastic material deposition occurs to form the three-dimensional porous structures. The tray (10) is arranged in a position substantially perpendicular to the plastic material application nozzle (9) and has a horizontal translational movement according to two directions, a first transverse direction (y) and a second longitudinal direction (x). A relative rotational movement is established between the extrusion head (1) and the tray (10), the extrusion head (1) being able to have rotational movement, or the extrusion head (1) being able to be fixed and the tray (10) being able to have rotational movement in addition to the horizontal translational movement.

The tray (10) has an adhesive surface that favors the fixing of the strands of melted plastic material deposited thereon. To obtain a suitable adherence, the possibility that the surface of the tray is coated with a sheet with certain roughness, or that the surface itself of the tray (10) reproduces said roughness has been envisaged. Another possibility is to provide the tray (10) with a thermal shield heating the surface of the tray (10) to favor the adhesion of the strands thereon.

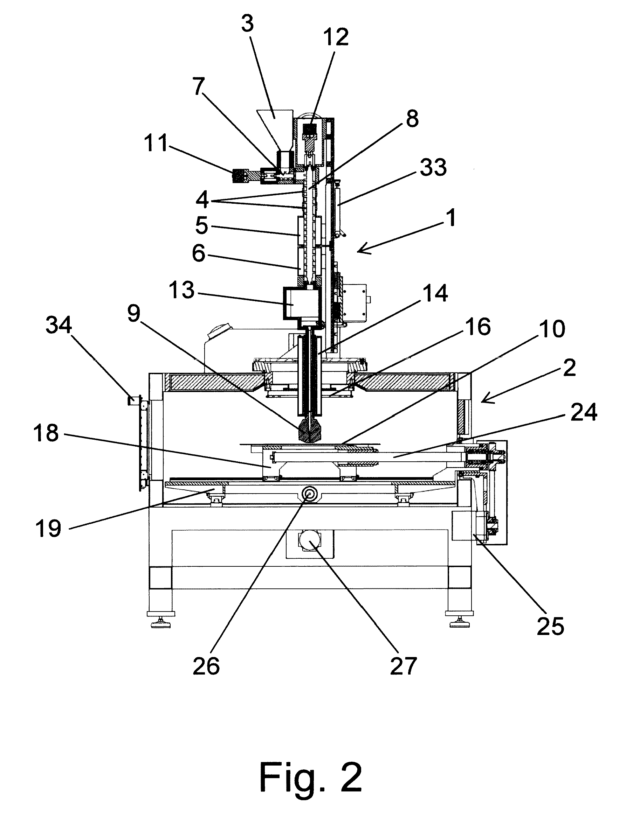

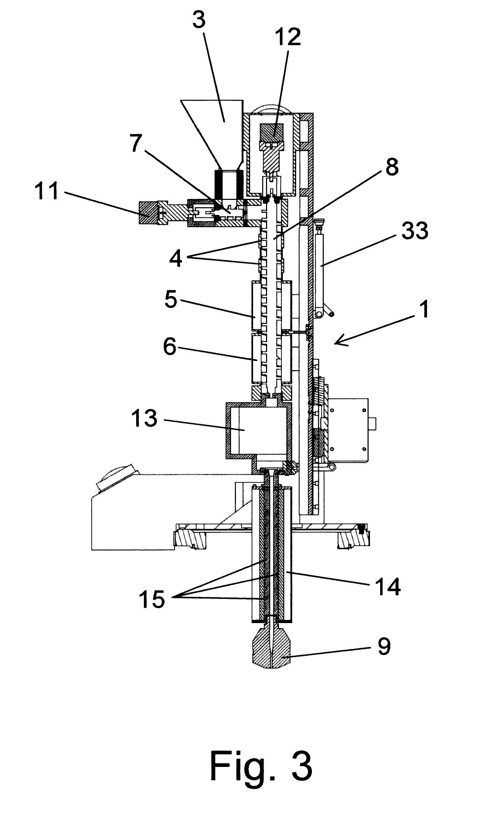

As seen in detail in Figures 2 and 3, the means of the extrusion head (1) conducting the plastic material from the loading hopper (3) to the nozzle (9) are a horizontal worm screw (7) and a vertical worm screw (8), the horizontal worm screw (7) being operated by a direct current motor (11) and the vertical worm screw (8) by an alternating current motor (12). The heating means of the extrusion head (1) are three heaters (4, 5, 6) that are arranged consecutively surrounding the outside of the vertical worm screw (8), whereby a progressive heating of the plastic material is performed to obtain a suitable viscosity for application.

Additionally, the means of the extrusion head (1) conducting the plastic material from the loading hopper (3) to the nozzle (9) incorporate a pump (13) and a channel (14). The pump (13) driving the melted plastic material through the heaters (4, 5, 6) to the nozzle (9) inside the heated chamber (2) is arranged at the outlet of the vertical worm screw (8). The extrusion head (1) is partially introduced in the heated chamber (2), the loading hopper (3), the worm screws (7, 8) and the pump (13) being located outside the heated chamber (2), and the nozzle (9) being located inside the heated chamber (2). Therefore, the channel (14) which is surrounded by a heater (15), specifically an electric heater assuring that the melted plastic material reaches the application nozzle (9) at a suitable temperature, is used to connect the outlet of the pump (13) located outside the heated chamber (2) with the nozzle (9) located inside the heated chamber (2),.

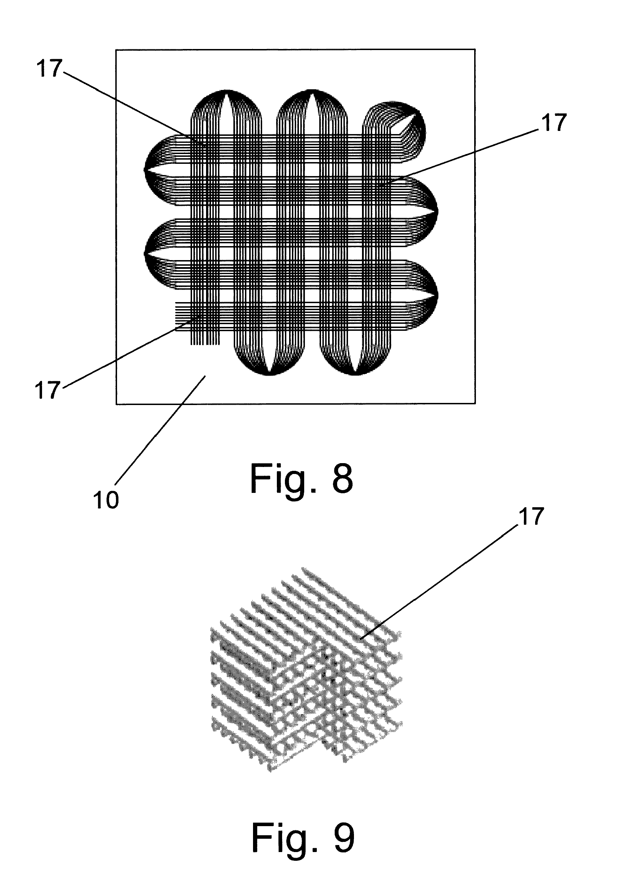

The heated chamber (2) internally incorporates a radiator (16), close to the plastic material deposition area on the tray (10), which assures that the temperature in the heated chamber (2) is maintained in suitable conditions for the formation of the porous structures. As seen in the schematic view of Figure 8, the three-dimensional porous structures (17) are obtained by means of the deposition of multiple strands of melted plastic material coming out of the nozzle (9) on the tray (10), such that a three-dimensional porous structure (17) is obtained in the area where successive intertwinings of the strands of plastic material occur. The radiator (16) allows for suitable temperature conditions inside the heated chamber (2) so that the strands of plastic material remain hot and join suitably to one another when the intertwinings occur. Figure 9 shows a perspective view of a three-dimensional porous structure (17) which is obtained by cropping one of the intertwining areas of the strands of plastic material that are deposited on the tray (10). Additionally, it has been envisaged that the inner walls of the heated chamber (2) are coated with an insulating material that prevents heat loss. Likewise, sensors are arranged inside the heated chamber (2) for controlling the temperature at which the deposition occurs inside the chamber.

The plastic material application nozzle (9) is arranged at a distance of less than 100 millimeters from the tray (10), this distance is critical so that the strands of plastic material coming out of the nozzle (9) are deposited in a controlled manner on the tray (10), since for greater distances, the strands may deform before being deposited on the tray (10) due to the elastic behavior of the plastic material, which would result in obtaining three-dimensional porous structures (17) with an unsuitable pore size.

The tray (10) on which the strands of plastic material are deposited is arranged on a first platform (18) horizontally movable in the first transverse direction (y), said first platform (18) in turn being arranged on a second platform (19) horizontally movable in the second longitudinal direction (x). The first platform (18) on which the tray (10) is arranged incorporates in its lower portion runners (20) sliding over transverse guides (21) that are arranged on the upper portion of the second platform (19), whereas the second platform (19) incorporates in its lower portion other runners (22) sliding over transverse guides (23) that are arranged on the lower portion of the heated chamber (2).

The first platform (18) is coupled to a first spindle-nut mechanism (24) rotated by a first motor (25), and the second platform (19) is coupled to a second spindle-nut mechanism (26) rotated by a second motor (27). The first and second platforms (18, 19), and therefore the tray (10), can be operated with other means other than the nut-spindle operation, such as for example, by means of pneumatic or hydraulic cylinders, without it altering the concept of the invention.

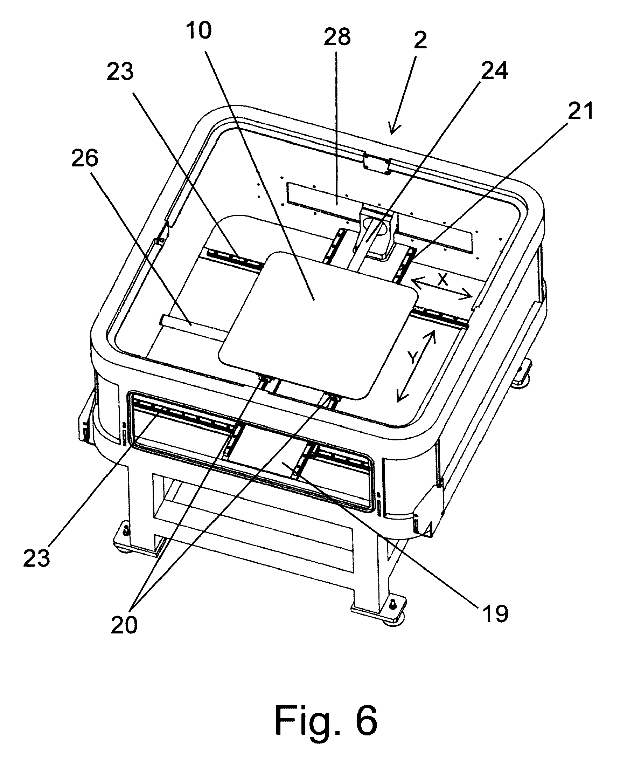

To prevent the motors (25, 27) from being able to be affected by the temperature of the heated chamber (2), and to avoid having to provide the motors with special temperature insulations, it has been envisaged that the motors (25, 27) of the nut-spindle mechanisms (24, 26) are arranged outside the heated chamber (2). Therefore, the heated chamber (2) has an opening (28) on one of its sides to allow the movement of the first motor (25) together with the second platform (19) (see Figure 6). To assure that the opening (28) is closed properly, a bellows type enclosure or the like is used.

When the extrusion head (1) has rotational movement, it can rotate about its longitudinal axis such that the melted plastic material application nozzle (9) can rotate an angle of 360°, which allows modifying the deposition path of the strands of plastic material on the tray (10). To that end, the extrusion head (1) incorporates a sprocket wheel (29) which is rotated by means of a pinion (30) moved by a motor (31). The sprocket wheel (29) is arranged above the heated chamber (2) and is integrally attached to the channel (14), such that the motor (31) operates the pinion (30) which meshes with the sprocket wheel (29) and causes the rotation of the extrusion head (1) assembly.

When the tray (10) has rotational movement and the extrusion head (1) is fixed, the tray (10) is not arranged directly on the first platform (18), but is arranged indirectly on said first platform (18) through a rotational rotating shaft.

The possibility of changing the distance at which the strands of plastic material are deposited, i.e., to enable changing the distance between the tray (10) and the plastic material outlets of the nozzle (9) has been envisaged, it has been envisaged that the extrusion head (1), or in the absence thereof, the tray (10), has vertical translation means.

The tray (10) can be removed from the machine to enable cropping the areas in which the strands of plastic material have intertwined, which corresponds with the three-dimensional porous structures (17). The heated chamber (2) has a gate opening (34) in its front portion to facilitate the removal of the tray (10).

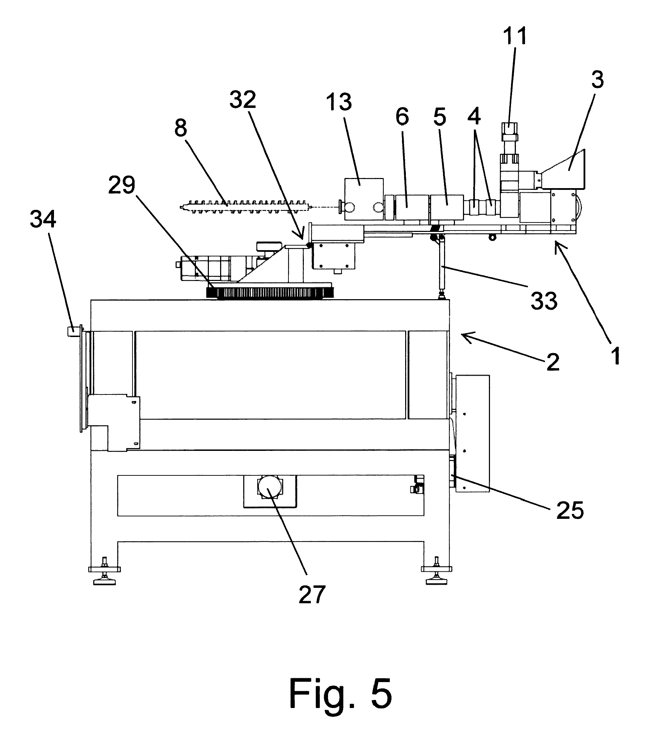

The extrusion head (1) can be collapsed horizontally to facilitate the removal of the vertical worm screw (8) when cleaning or maintenance tasks are performed since during the use of the machine, plastic material gradually builds up in the vertical worm screw (8), which may result in jams. To that end, the extrusion head (1) has a hinged area (32) at the height of the attachment between the pump (13) and the channel (14) which allows horizontally collapsing the upper portion of the extrusion head, as can be seen in Figure 5. The extrusion head (1) incorporates a support stand (33) to support the weight of the upper portion of the extrusion head (1) in the collapsed position thereof.

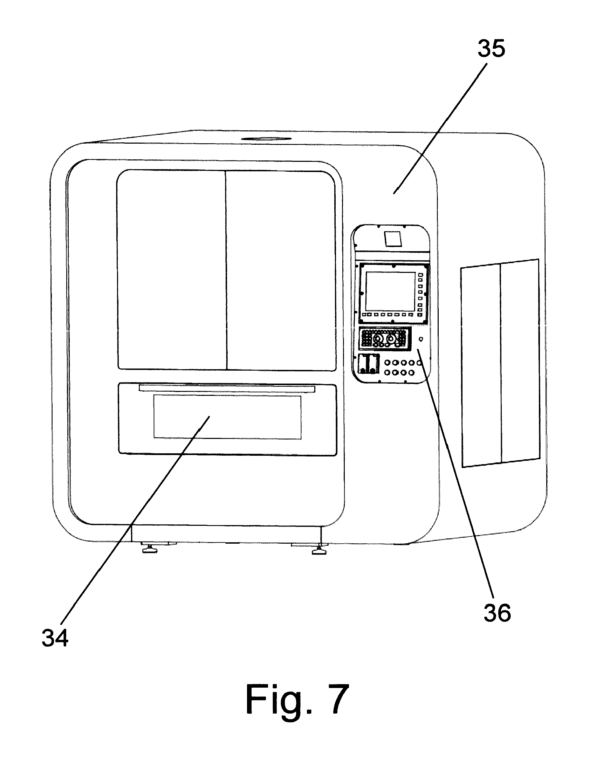

Figure 7 depicts the machine of the invention with a protective outer casing (35) wherein a control panel (36) which allows controlling the different operating variables of the machine is arranged.

Based on the foregoing, to start the manufacture of the three-dimensional porous structures (17), the plastic material pellet is first introduced in the loading hopper (2) and it falls by gravity into the horizontal worm screw (7) which conducts the plastic material to the vertical worm screw (8), which in turn conducts the plastic material to the pump (13), while at the same time the heaters (4, 5, 6) gradually melt the material, such that the plastic material is already melted at the inlet of the pump (13). The pump (13) drives the already melted plastic material to the nozzle (9) inside the heated chamber (2) through the channel (14), strands of plastic material flowing through the plurality of holes of the nozzle (9), such that multiple intertwinings of the strands of plastic material are obtained by interpolating the two horizontal translational movements of the tray (10) and the rotational movement of the extrusion head (1). When the deposition of the strands of plastic materials ends, the tray (10) is removed from the machine and the areas where the intertwinings occurred are cropped, such that each of said intertwining areas of the strands of plastic material corresponds with a three-dimensional porous structure (17).

## Claims

1. A machine for the manufacture of three-dimensional porous structures applicable to tissue regenerative medicine, **characterized in that** it comprises a plastic material extrusion head (1) including a plastic material loading hopper (3), plastic material heating means and plastic material conducting means for conducting the plastic material from the loading hopper (3) to a melted plastic material application nozzle (9) which is arranged inside a heated chamber (2), the nozzle (9) having a plurality of outlets for the simultaneous deposition of several strands of melted plastic material, and **in that** inside the heated chamber (2) there is arranged a tray (10) with an adhesive surface having a horizontal translational movement, and on which the nozzle (9) deposits the strands of melted plastic material to form the three-dimensional porous structures (17), and **in that** the extrusion head (1) has a relative rotational movement with respect to the tray (10).

2. The machine according to claim 1, wherein the plastic material application nozzle (9) is arranged at a distance of less than 100 millimeters from the tray (10).

3. The machine according to claim 1, wherein the plastic material conducting means comprise a horizontal worm screw (7) connecting with a vertical worm screw (8), at the outlet of which there is arranged a pump (13) driving the plastic material through a channel (14) to the nozzle (9) inside the heated chamber (2).

4. The machine according to claims 1 and 3, wherein the plastic material heating means comprise three heaters (4, 5, 6) that are arranged consecutively surrounding the outside of the vertical worm screw (8).

5. The machine according to claim 3, wherein the channel (14) is surrounded by a heater (15).

6. The machine according to claim 1, wherein the tray (10) is arranged on a first platform (18) horizontally movable in a first transverse direction (y), said first platform (18) in turn being arranged on a second platform (19) horizontally movable in a second longitudinal direction (x).

7. The machine according to the preceding claim, wherein the first platform (18) incorporates runners (20) sliding over transverse guides (21) arranged on the second platform (19), and the second platform (19) incorporates other runners (22) sliding over transverse guides (23) arranged on the heated chamber (2), and wherein the first platform (18) is coupled to a first spindle-nut mechanism (24) rotated by a first motor (25), and the second platform (19) is coupled to a second spindle-nut mechanism (26) rotated by a second motor (27).

8. The machine according to the preceding claim, wherein the first and second motor (25, 27) are arranged outside the heated chamber (2), the heated chamber (2) having an opening (28) to allow the transverse movement of the first motor (25) and of the first spindle-nut mechanism (24).

9. The machine according to claim 1, wherein the extrusion head (1) incorporates a sprocket wheel (29) which is operated by means of a pinion (30) to cause the rotation of the extrusion head (1).

10. The machine according to claims 1 and 3, wherein the extrusion head (1) has a hinged area (32) at the height of the connection between the pump (13) and the channel (14) which allows collapsing the extrusion head (1) horizontally to facilitate the removal of the vertical worm screw (8).

11. The machine according to the preceding claim, wherein the extrusion head (1) incorporates a support stand (33) which allows supporting the extrusion head (1) in its collapsed position.

12. The machine according to claim 1, wherein the heated chamber (2) internally incorporates a radiator (16) close to the plastic material application area on the tray (10).

13. The machine according to claim 1, wherein the tray (10) has a vertical translational movement for changing the distance with respect to the melted plastic material application nozzle (9).

14. The machine according to claim 1, wherein the extrusion head (1) has a vertical translational movement for changing the distance with respect to tray (10) on which melted plastic material is applied.

15. The machine according to claim 1, wherein the heated chamber (2) incorporates on one of its side walls a gate opening (34) to facilitate the removal of the tray (10) on which the three-dimensional porous structures (17) are formed.
